# EUROPEAN PATENT APPLICATION

(11) **EP 1 274 244 A1**
(43) Date of publication of application: **08.01.2003**
(21) Application number: 01273336.6
(22) Date of filing: 29.11.2001
(51) Int. Cl.: H04N 7/173, H04N 5/76, H04N 5/91, H04N 5/92, H04H 1/02, H04J 3/00

(54) **STORAGE DIGITAL BROADCASTING APPARATUS AND STORAGE DIGITAL BROADCASTING RECEIVER**

(30) Priority: 18.01.2001 JP 2001010257
(71) Applicant: MITSUBISHI DENKI KABUSHIKI KAISHA, Tokyo 100-8310 (JP)
(72) Inventor: MATSUZAKI, K. MITSUBISHI DENKI KABUSHIKIKAISHA, Tokyo 100-8310 (JP); KATO, Y. MITSUBISHI DENKI KABUSHIKI KAISHA, Tokyo 100-8310 (JP)
(74) Representative: Pfenning, Meinig & Partner
(86) International application number: JP0110447
(87) International publication number: WO02058392

(57) **Abstract**

A stored type digital broadcasting receiver includes a channel decoding unit (43r) that detects a part of broadcasting contents which cannot be received correctly because of an transmission path error from the receivedbroadcasting contents based on results of Viterbi decoding or error correction processing. When the channel decoding unit (43r) detects a transmission path error which cannot be corrected, the stored type digital broadcasting receiver makes a request of a broadcast service provider for the transmission of a complement to the received broadcasting contents. When receiving the requested complement to the broadcasting contents from the broadcast service provider, the stored type digital broadcasting receiver refers to identification information (d13) of an FEC frame (d10) included in the complement to the broadcasting contents and writes the complement to the broadcasting contents over a corresponding file stored in a storage medium of a received bitstream storing and reproducing unit (30rd), or creates a new file and stores the complement to the broadcasting contents in the new file.

## Description

### Field of the Invention

The present invention relates to a stored type digital broadcasting transmitter associated with a digital broadcasting service provided by a space satellite, a ground wave, a CATV network, the Internet, or the like and, particularly, intended for stored type digital broadcasting receivers having storing and reproducing functions. It also relates to a stored type digital broadcasting receiver.

### Background of the Invention

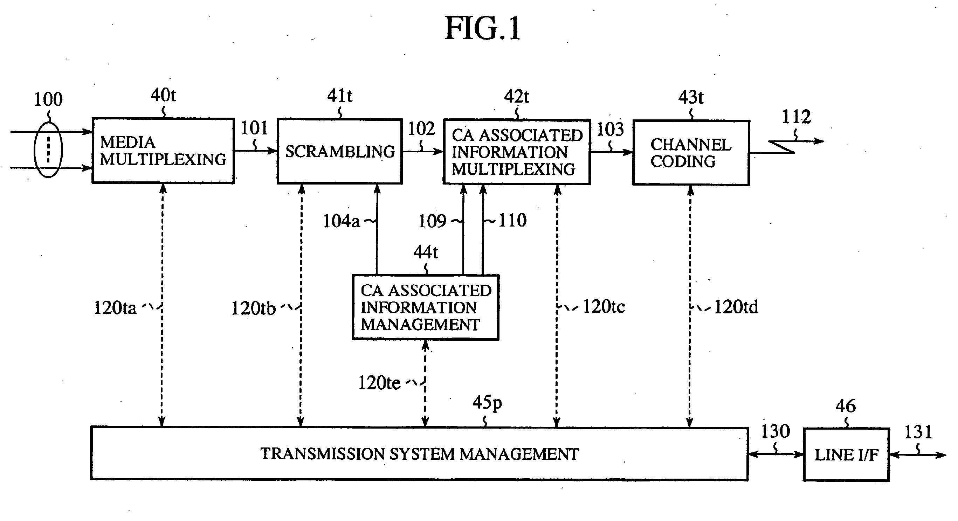

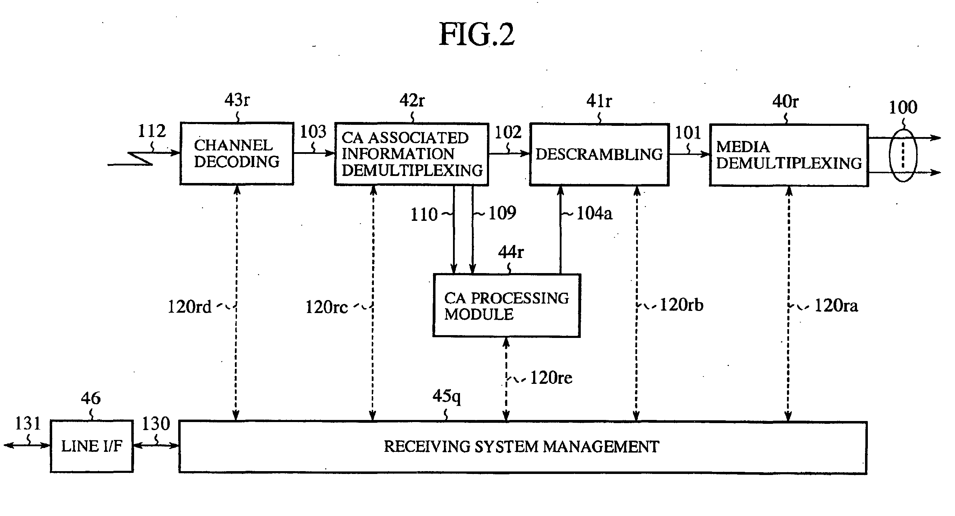

Fig. 2 is a block diagram showing the structure of a prior art stored type digital broadcasting receiver disclosed in "CONDITIONAL ACCESS SPECIFICATION FOR DIGITAL SATELLITE BROADCASTING SERVICES USING BROADCASTING SATELLITES", ARIB STANDARD provided by Association of Radio Industries and Businesses (ARIB STD-B25 version1.0), p.160, and Fig. 1-1 (decided on 26 October, 1999), for example. Fig. 1 is a block diagram showing the structure of a stored type digital broadcasting transmitter that corresponds to the prior art stored type digital broadcasting receiver.

In Fig. 1, reference numeral 40t denotes a media multiplexing unit for multiplexing a coded video bitstream, a coded audio bitstream and so on so as to produce a multiplexed bitstream, reference numeral 41t denotes a scrambling unit for scrambling broadcasting contents, reference numeral 42t denotes a CA (conditional access) associated information multiplexing unit for multiplexing information on a pay broadcasting, reference numeral 43t denotes a channel coding unit, reference numeral 44t denotes a CA associated information management unit for managing CA (conditional access) associated information and for generating key data (a scrambling key) used for scrambling processing and the CA associated information, and reference numeral 45p denotes a transmission system management unit for managing and controlling the operation of the entire stored type digital broadcasting transmitter. In the figure, "unit" included in such "··· unit" as the media multiplexing unit, the scrambling unit, and so on is omitted for simplicity of the explanation. Similarly, "unit" is omitted in all other figures.

In Fig. 2, reference numeral 43r denotes a channel decoding unit, reference numeral 42r denotes a CA (conditional access) associated information demultiplexing unit for separating the information on a pay broadcasting, reference numeral 41r denotes a descrambling unit for descrambling the scrambled broadcasting contents received by the receiver, reference numeral 40r denotes a media demultiplexing unit for demultiplexing the multiplexed bitstream into the coded video bitstream, the coded audio bitstream, and so on, reference numeral 44r denotes a CA. processing module for generating key data (a scrambling key) used for descrambling the scrambled broadcasting contents based on the CA associated information, and reference numeral 45q denotes a receiving system management unit for managing and controlling the operation of the stored type digital broadcasting receiver.

Next, processing performed by the prior art stored type digital broadcasting transmitter will be explained with reference to Fig. 1. In Fig. 1, the media multiplexing unit (40t) multiplexes various coded media bitstreams (100) such as a coded video bitstream and a coded audio bitstream, so as to produce a multiplexed bitstream (101). The scrambling unit (41t) performs scrambling processing on the multiplexed bitstream (101) using a scrambling key (104a) so as to produce a scrambled bitstream (102). The CA associated information multiplexing unit (42t) multiplexes an ECM (entitlement control message) (109) and an EMM (entitlement management message) (110) into the scrambled bitstream (102) so as to generate a CA associated information multiplexed bitstream (103). The ECM (109) contains the CA associated information associated with the broadcasting contents, such as the scrambling key, and CA control parameters. In general, all or part of the ECM is encrypted. On the other hand, the EMM (110) contains information on each viewing subscriber and key data (a work key) used for decrypting the encrypted part included in the ECM. All or part of the EMM is generally encrypted by using a master key. The scrambling key (104a), the ECM (109), and the EMM (110) are generated by the CA associated information management unit (44t). The channel coding unit (43t) performs FEC (forward error correction) processing, energy spread processing, convolutional coding, transmission frame forming, modulation processing, and so on on the CA associated information multiplexed bitstream (103) and sends out the processed CA associated information multiplexed bitstream (103) as a transmission bitstream (112). The stored type digital broadcasting transmitter having an interactive service function of providing an interactive service for viewers is provided with a line interface (46) for sending and receiving information to and from viewers by way of a phone wire or the Internet, for example. The transmission system management unit (45p) manages information to be received and sent out by way of the line interface (46), and manages and controls the operation of the entire stored type digital broadcasting transmitter.

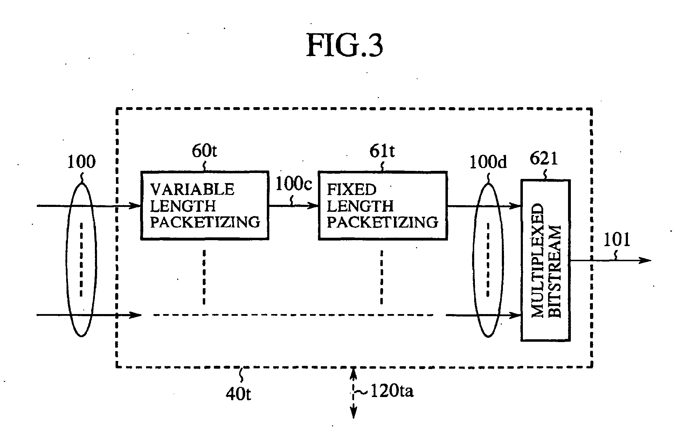

Next, processing performed by the media multiplexing unit (40t) will be explained with reference to Fig. 3. Fig. 3 is a block diagram showing the structure of the media multiplexing unit (40t). In Fig. 3, reference numeral 60t denotes a variable-length packetizing unit, and reference numeral 61t denotes a fixed-length packetizing unit, and reference numeral 62t denotes a multiplexed bitstream generation unit. When various coded media bitstreams (100) are input to the media multiplexing unit (40t), the variable-length packetizing unit (60t) first performs variable-length packetizing processing on each coded media bitstream so as to convert each coded bitstream (100) into a variable-length packet stream (100c). The fixed-length packetizing unit (61t) then divides the variable-length packet stream (100c) provided for each media into a plurality of fixed-length packets so as to convert it into a fixed-length packet stream (100d). Finally, the multiplexed bitstream generation unit (62t) multiplexes the plurality of fixed-length packet streams (100d) provided for the plurality of media for each fixed-length packet so as to generate a multiplexed bitstream (101).

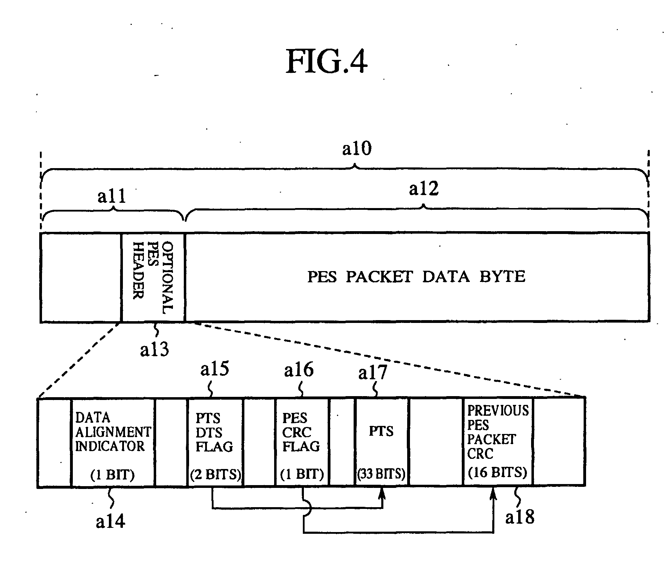

Fig. 4 is an explanatory drawing showing the structure of a PES packet, which is a variable-length packet generated by the variable-length packetizing unit (60t) and which is defined by he MPEG-2 system standard (ISO/IEC 13818-1). In Fig. 4, reference numeral a10 denotes a PES packet, reference numeral a11 denotes a PES packet header, and reference numeral a12 denotes a PES packet data byte in which a coded bitstream (100) is stored. The PES packet header (a11) includes an optional PES header (a13) that consists of bit fields such as a data alignment indicator (a14), a PTS DTS flag (a15), a PES CRC flag (a16), a PTS (a17), and a previous PES packet CRC (a18). The presence or absence of the PTS bit field (a17) is notified by the PTS DTS flag (a15), and the presence or absence of the previous PES packet CRC bit field (a18) is notified by the PES CRC flag (a16). The previous PES packet CRC (a18) is a 16-bit field for storing a CRC value corresponding to the PES packet data byte included in the immediately-preceding PES packet.

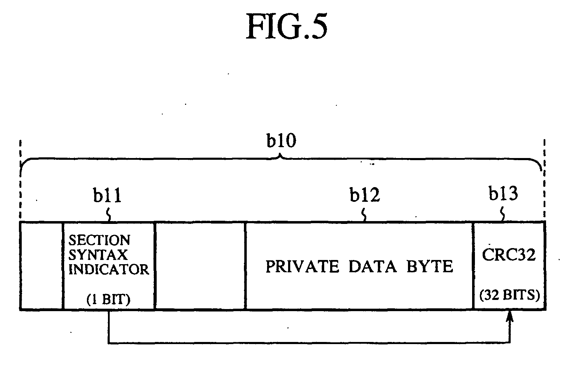

Fig. 5 is an explanatory drawing showing the structure of a section, which is a variable-length packet generated by the variable-length packetizing unit (60t) and which is defined by the MPEG-2 system standard (ISO/IEC 13818-1). In Fig. 5, reference numeral b10 denotes a section, reference numeral b11 denotes a section syntax indicator, reference numeral b12 denotes a private data byte in which a coded bitstream (100) is stored, and reference numeral b13 denotes a CRC32 for storing a CRC value corresponding to the section. The bit field of a CRC32 (b13) exists when the section syntax indicator (b11) is "1".

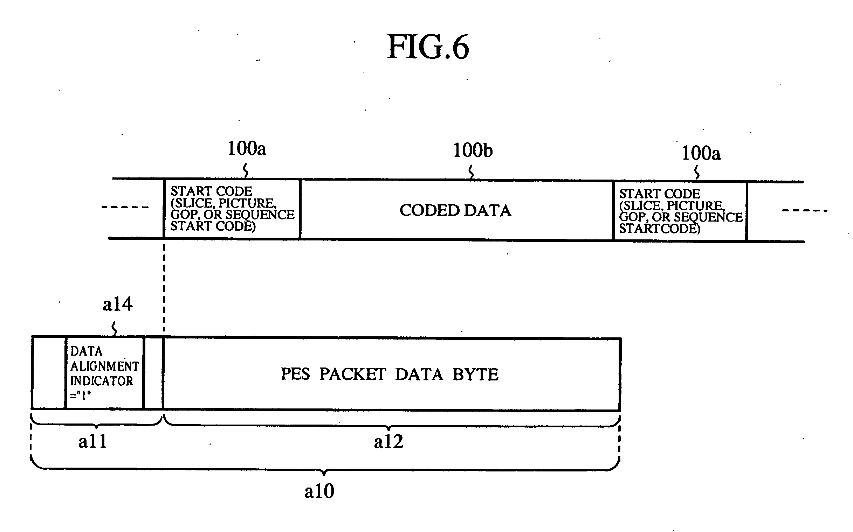

Next, a description will be made as to a method of storing a coded bitstream (100) in each PES packet (a10) which the variable-length packetizing unit (60t) uses, with reference to Fig. 6. Fig. 6 is an explanatory drawing for explaining a case of packetizing a coded video bitstream which is encoded based on the MPEG-2 video standard (ISO/IEC 13818-2) into PES packets. A coded video bitstream obtained based on the MPEG-2 video standard consists of a start code (100a) to which a unique code is assigned and coded data (100b). When the data alignment indicator (a14) included in the PES packet header (a11) is "1", the start code (100a) is placed immediately behind the PES packet header (a11), i.e., at the head of the PES packet data byte (a12).

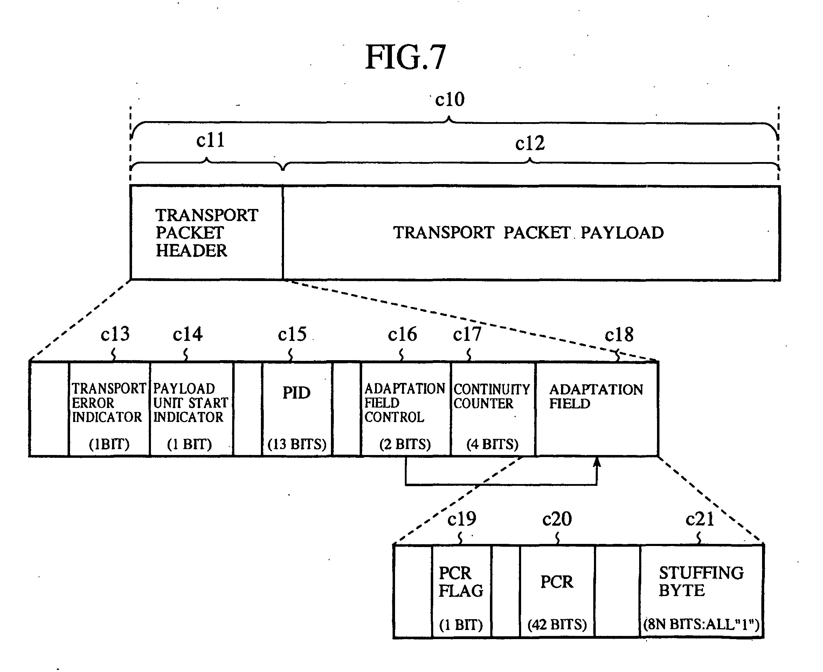

Fig. 7 is an explanatory drawing showing the structure of a transport packet (also referred to as "TSP") of a fixed-length (188 bytes), which is generated by the fixed-length packetizing unit (61t) and which is defined by the MPEG-2 system standard (ISO/IEC 13818-1). In Fig. 7, reference numeral c10 denotes a transport packet, reference numeral c11 denotes a transport packet header (TSP header), and reference numeral c12 denotes a transport packet payload (TSP payload) in which a variable-length packet stream (100c) is stored. The transport packet header (c11) consists of bit fields such as a transport error indicator (c13), a payload unit start indicator (c14), a PID (c15) an adaptation field control (c16), a continuity counter (c17), and an adaptation field (c18). The PID (c15) is an identification for identifying the corresponding coded bitstream and has an assigned different value corresponding to the coded bitstream.. The transport error indicator (c13) is used to notify that an error which cannot be corrected exists in the transport packet. When the head byte of the PES packet is located at the head of the transport packet payload (c12), the payload unit start indicator (c14) becomes "I". Furthermore, the payload unit start indicator (c14) becomes "1" when a section starting from the first byte thereof is stored in the transport packet payload (c12). The presence or absence of the adaptation field (c18) is notified by the adaptation field control (c17). The adaptation field (c18) consists of bit fields such as a PCR (program clock reference) flag (c19), a PCR (c20), and a stuffing byte (c21). The PCR (c20) is used to bring the transmitter system time clock in synchronization with the receiver system time clock. The PCR value is defined so that it has the same value in a little more than 24 hours. The PCR (c20) is transmitted at fixed intervals of 100ms or less according o the MPEG-2 system standard. The presence or absence of the bit field of a PCR (c20) is shown by the PCR flag (c19). The stuffing byte (c21) is inserted as a dummy byte to make the transport packet has the fixed-length (188 bytes).

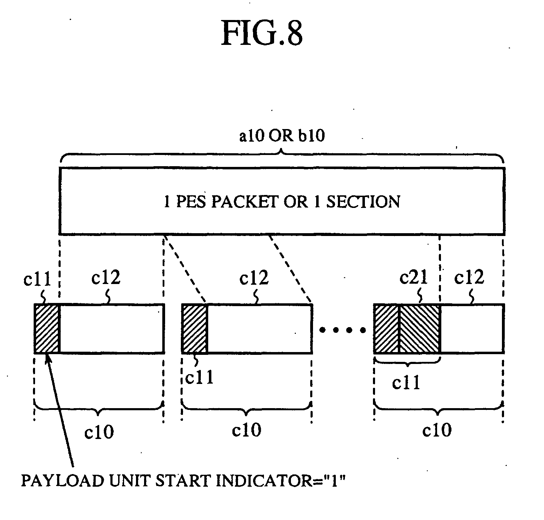

Next, a description will be made as to a process of storing a PES packet or section in the plurality of transport packets (c10), which is performed by the fixed-length packetizing unit (61t), with reference to Fig. 8. Fig. 8 is an explanatory drawing for explaining transport packetizing of a PES packet or section. Part of one PES packet (a10) or one section (b10), starting from the first byte thereof, is stored in the transport packet payload (c12) of a transport packet placed in the leftmost side of Fig. 8 and then the corresponding payload unit start indicator (c14) is set to "1". On the other hand, the last part of the PES packet (a10) or section (b10), including the tail byte thereof, is stored in the transport packet payload (c12) of a transport packet placed in the rightmost side of Fig. 8, and a stuffing byte (c21) is inserted into the transport packet because of adjustment of the length of the packet.

Next, a description will be made as to scrambling processing done by the scrambling unit (41t). The scrambling unit (41t) performs the scrambling processing on the payload segment (c12) of each transport packet (c10) which constitutes the multiplexed bitstream (101) using the scrambling key (104a) given by the CA associated information management unit (44t) so as to generates a scrambled bitstream (102). The scrambling unit (41t) does not perform any scrambling processing on the transport packet header (c11) of each transport packet.

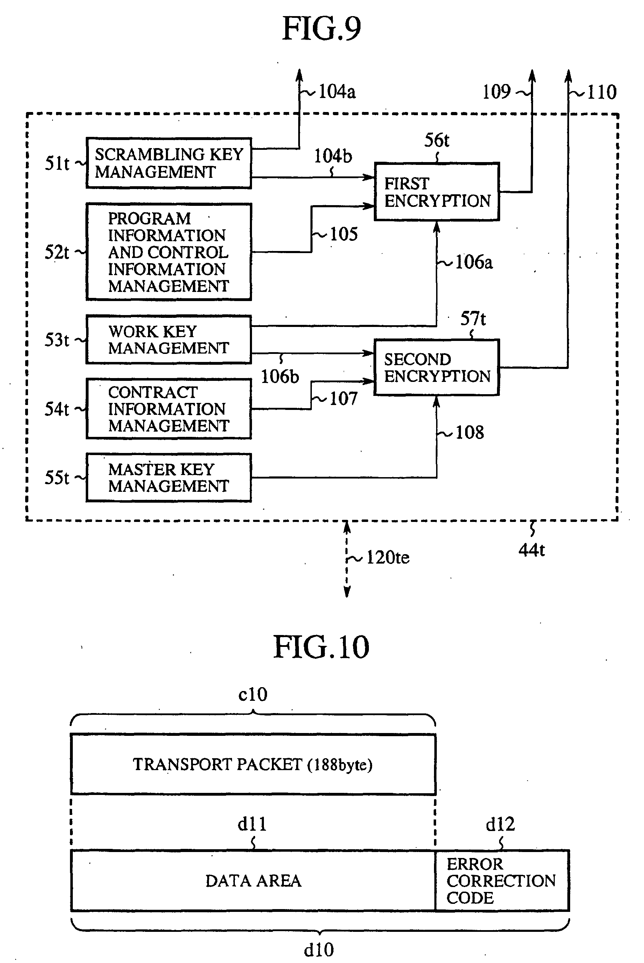

Next, a description will be made as to processing done by the CA associated information management unit (44t) with reference to Fig. 9. Fig. 9 is a block diagram showing the structure of the CA associated information management unit (44t). In Fig. 9, reference numeral 51t denotes a scrambling key management unit for managing the scrambling key, reference numeral 52t denotes a program information and control information management unit for managing information associated with the ECM, reference numeral 53t denotes a work key management unit for managing the work key to be used to encrypt data included in the ECM, reference numeral 54t denotes a contract information management unit for managing information associated with the EMM, reference numeral 55t denotes a master key management unit for managing the master key to be used to encrypt data included in the EMM, reference numeral 56t denotes a first encryption unit for encrypting the data included in the ECM, and reference numeral 57t denotes a second encryption unit for encrypting the data included in the EMM.

The CA associated information management unit (44t) generates the scrambling key (104a), the ECM(109) and the EMM (110). The scrambling key management unit (51t) generates the scrambling key (104a) by using initial value data and a random number, for example, at predetermined intervals and delivers the scrambling key (104a) to the scrambling unit (41t). In addition, the scrambling key management unit (51t) transfers the scrambling key (104b) used for the scrambling processing to the first encryption unit (56t). The first encryption unit (56t) forms a not-yet-encrypted ECM from the scrambling key (104b) and a not-yet-encrypted ECM element (105) given by the program information and control information management unit (52t). The first encryption unit (56t) encrypts part or all of the bit fields of the not-yet-encrypted ECM by using the work key (106a) generated by the work key management unit (53t) so as to generate the ECM (109). The second encryption unit (57t) forms a not-yet-encrypted EMM by using the work key (106b) and the not-yet-encrypted EMM element given by the contract information management unit (54t). The second encryption unit (57t) then encrypts part or all of the bit fields of the not-yet-encrypted EMM by using the master key (108) generated by the master key management unit (55t) so as to generate the EMM (110). The transmission system management unit (45p) is notified of the state of each unit which constitutes the CA associated information management unit (44t) by a transmission system control signal (120te). On the other hand, the operation of each unit which constitutes the CA associated information management unit (44t) is controlled according to the transmission system control signal (120te) from the transmission system management unit (45p). In addition, the transmission system management unit (45p) transfers information provided by a subscriber, which is extracted from the line data stream (130) and which is stored in the transmission system control signal (120te), to the CA associated information management unit (44p). The contract information management unit (54t) manages the information from a subscriber, which is thus received thereby, and updates the information if necessary.

Next, a description will be made as to FEC (forward error correction) processing done by the channel coding unit (43t). Fig. 10 is an explanatory drawing showing the structure of an example of an error correction frame. The channel coding unit (43t) performs the FEC processing on the CA associated information multiplexed bitstream (103) by using a Read Solomon code (RS code). The FEC processing is carried out for each transport packet which is an element included in the CA associated information multiplexed bitstream (103), as shown in Fig. 10. In other words, a transport packet (c10) is stored in the data area (d11) of the FEC frame (d10), and an error correction code (d12) is added to the data area so that an error correction frame is generated.

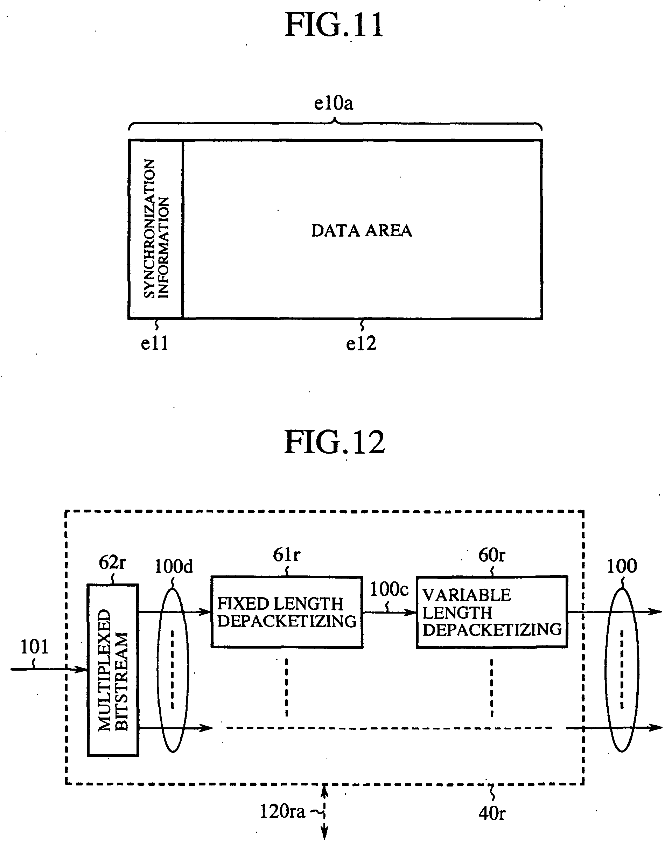

Next, a description will be made as to a transmission frame formed by the channel coding unit (43t). Fig. 11 is an explanatory drawing showing the structure of a transmission frame formed when transmitted. The channel coding unit (43t) stores a bitstream, on which the FEC processing, the energy spread processing, the convolutional coding processing and so on are carried out, in a data area (e12) of each transmission frame (e10a) as shown in Fig. 11. Synchronization information (e11) used to identify the head of each transmission frame is given to each transmission frame.

Next, a description will be made as to processing done by a prior art stored type digital broadcasting receiver with reference to Fig. 2. Basically, the processing done by the prior art stored type digital broadcasting receiver is the reverse of the processing done by the prior art stored type digital broadcasting transmitter. In other words, in the prior art stored type digital broadcasting receiver of Fig. 2, the channel decoding unit (43r) performs demodulation processing, transmission frame reconstructing processing, Viterbi decoding, energy reverse spreading processing, error correction processing and so on on the received transmission bitstream (112) so as to reproduce the CA associated information multiplexed bitstream (103). The CA associated information demultiplexing unit (42r) reproduces the scrambled bitstream (102) from which the ECM (entitlement control message) (109) and the EMM (entitlement management message) (110) are separated. The ECM (109) and the EMM (110) separated by the CA associated information demultiplexing unit (42r) are input to the CA processing module (44r), and the encrypted information is decoded and the scrambling key (104a) is reproduced. The descrambling unit (41r) descrambles the scrambled bitstream (102) by using the reproduced scrambling key (104a) so as to reproduce the multiplexed bitstream (101). The media demultiplexing unit (40r) demultiplexes the multiplexed bitstream (101) so as to reproduce a plurality of coded bitstreams (100) provided for a plurality of media such as video and audio.

In addition, the stored type digital broadcasting receiver having an interactive function is provided with a line interface (46) that can up-load information to a broadcaster by way of a phone wire, the Internet, or the like, for example. The receiving system management unit (45q) manages information to be exchanged by way of the line interface (46), and also manages and controls the operation of the entire stored type digital broadcasting receiver.

Next, a description will be made as to processing done by the media demultiplexing unit (40r) with reference to Fig. 12. Fig. 12 is a block diagram showing the structure of the media demultiplexing unit (40r) . In Fig. 12, reference numeral 60r denotes a variable-length depacketizing unit, reference numeral 61r denotes a fixed-length depacketizing unit, and reference numeral 62r denotes a multiplexed bitstream demultiplexing unit. The multiplexed bitstream (101) is demultiplexed into a plurality of fixed-length packet streams (100d) provided for a plurality of media by the multiplexed bitstream demultiplexing unit (62r). The fixed-length depacketizing unit (61r) depacketizes each of the plurality of fixed-length packets which constitutes each fixed-length packet stream (100d) into a header and a payload, and further combines the plurality of separated payloads so as to reproduce a variable-length packet stream (100c). The variable-length depacketizing unit (60r) receives each variable-length packet stream (100c) from the fixed-length depacketizing unit (61r), depacketizes each of the plurality of variable-length packets which constitutes each variable-length packet stream (100c) to a header and a payload, and combines separated payloads so as to reproduce a coded bitstream (100) for each media information.

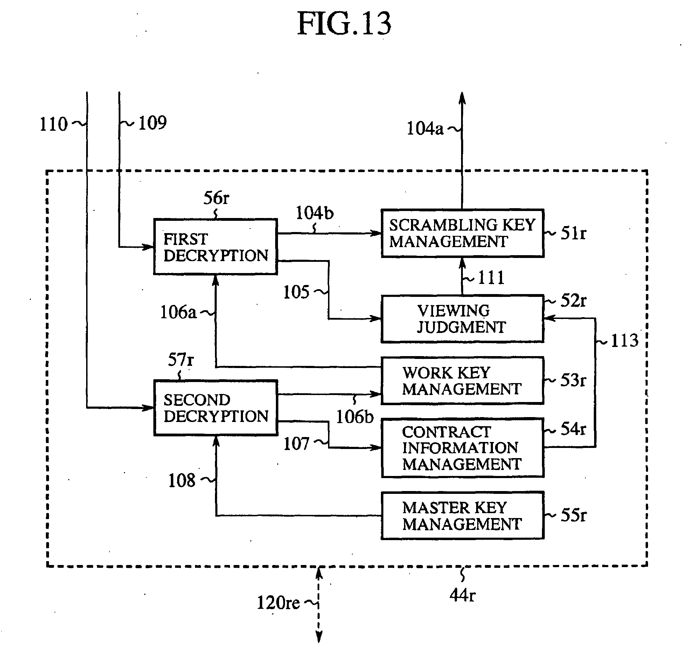

Next, a description will be made as to the processing done by CA processing module (44r) with reference to Fig. 13. Fig. 13 is a block diagram showing the structure of the CA processing module (44r). In Fig. 13, reference numeral 51r denotes a scrambling key management unit for managing the scrambling key used for descrambling processing, reference numeral 52r denotes a viewing determination unit for determining whether or not the broadcasting contents canbe viewed, reference numeral 53r denotes a work key management unit for managing the work key used to decrypt the encrypted data included in the ECM, reference numeral 54r denotes a contract information management unit for managing contract information, reference numeral 55r denotes a master key management unit for managing the master key used to decrypt the encrypted data included in the EMM, reference numeral 56r denotes a first decrypting unit for decrypting the encrypted data included in the ECM, and reference numeral 57r denotes a second decrypting unit for decrypting the encrypted data included in the EMM.

The CA processing module (44r) accepts the ECM (109) and the EMM (110) and reproduces the scrambling key (104a). The first decrypting unit (56r) receives the ECM (109) and decrypts the encrypted data included in the ECM by using the work key (106a) applied thereto from the work key management unit (53r), so as to reproduce the scrambling key (104b) and a not-yet-encrypted ECM element (105). On the other hand, the second decrypting unit (57r) receives the EMM (110) and decrypts the encrypted data included in the EMM by using the master key (108) applied thereto from the master key management unit (55r), so as to reproduce the work key (106b) and a not-yet-encrypted EMM element (107). The contract information management unit (54r) manages contract information acquired from the not-yet-encrypted EMM element (107). The viewing determination unit (52r) determines whether or not the broadcasting contents can be viewed with reference to the contract information (113) managed by the contract information management unit (54r) and the not-yet-encrypted ECM element reproduced by the first decrypting unit, and then notifies the scrambling key management unit (51r) of the viewing determination result (111). When the viewing determination unit (52r) determines that the broadcasting contents can be viewed, the scrambling key management unit (51r) outputs the scrambling key (104a). The receiving system management unit (45q) is notified of the state of each unit which constitutes the CA processing module (44r) by a receiving system control signal (120re). On the other hand, the operation of each unit which constitutes the CA processing module (44r) is controlled according to the receiving system control signal (120re) from the receiving system management unit (45q).

A problem with a prior art stored type digital broadcasting transmitter and a prior art stored type digital broadcasting' receiver constructed as above is that since any complementary information on a complement to the broadcasting contents which cause a receive failure is not provided by the transmitting side and therefore the receiving side has no alternative but to perform error correction processing or error concealment processing on a part of the received broadcasting contents in which the receive failure occurs, a degradation can be observed in the broadcasting contents reproduced by the receiving side when transmission path errors occur frequently.

Another problem is that when a storage medium in which the broadcasting contents are recorded is connected to the receiving side, the part of the received broadcasting contents in which a receive failure occurs is recorded unchanged in the storage medium and it is therefore difficult for the receiving side to record and reproduce the broadcasting contents while maintaining the quality of the broadcasting contents at high regardless of the state of the transmission path.

The present invention is proposed to solve the above-mentioned problems, and it is therefore an object of the present invention to provide a stored type digital broadcasting transmitter and a stored type digital broadcasting receiver capable of making a complement to a part of broadcasting contents in which a receive failure occurs.

### Disclosure of the Invention

A stored type digital broadcasting transmitter in accordance with the present invention is provided with a means for receiving a request for the retransmission of broadcasting contents from a viewer; a means for identifying the viewer who has made the request for the retransmission of broadcasting contents; and a means for transmitting the broadcasting contents which have been requested for the retransmission to the viewer.

As a result, the stored type digital broadcasting transmitter can allow stored type digital broadcasting receivers to record and reproduce broadcasting contents at all times with no degradation in the broadcasting contents regardless of the state of a transmission path, so that in a pay broadcasting service pay viewing subscribers would never have disadvantages under any weather conditions.

A stored type digital broadcasting receiver in accordance with the present invention is provided with a means for detecting a part of broadcasting contents which cannot be received correctly because of a transmission path error; and a means for making a request of a digital broadcasting service provider for the retransmission of the broadcasting contents which cannot be received correctly. The stored type digital broadcasting receiver reproduces the broadcasting contents from which an influence of the transmission path error is removed by receiving and storing a complement to the broadcasting contents which is sent from the digital broadcasting service provider.

As a result, the stored type digital broadcasting receiver can record and reproduce broadcasting contents at all times with no degradation in the broadcasting contents regardless of the state of a transmission path, so that in a pay broadcasting service pay viewing subscribers would never have disadvantages under any weather conditions.

### Brief Description of the Figures

Fig. 1 is a block diagram showing the structure of a prior art stored type digital broadcasting transmitter;
Fig. 2 is a block diagram showing the structure of a prior art stored type digital broadcasting receiver;
Fig. 3 is a block diagram showing the structure of a media multiplexing unit included in each of a stored type digital broadcasting transmitter of the present invention and a prior art stored type digital broadcasting transmitter;
Fig. 4 is an explanatory drawing of a PES packet defined by the MPEG-2 system standard;
Fig. 5 is an explanatory drawing of a section defined by the MPEG-2 system standard;
Fig. 6 is an explanatory drawing showing PES packetizing of a coded bitstream;
Fig. 7 is an explanatory drawing of a transport packet defined by the MPEG-2 system standard;
Fig. 8 is an explanatory drawing showing transport packetizing of a PES packet or section;
Fig. 9 is a block diagram showing the structure of a CA associated information management unit included in each of a stored type digital broadcasting transmitter of the present invention and a prior art stored type digital broadcasting transmitter;
Fig. 10 is an explanatory drawing showing the structure of an error correction frame processed by a prior art stored type digital broadcasting transmitter and a prior art stored type digital broadcasting receiver;
Fig. 11 is an explanatory drawing showing the structure of a frame which is constructed when transmitted in a prior art stored type digital broadcasting transmitter and a prior art stored type digital broadcasting receiver;
Fig. 12 is a block diagram showing the structure of a media demultiplexing unit included in each of a stored type digital broadcasting receiver of the present invention and a prior art stored type digital broadcasting receiver;
Fig. 13 is a block diagram showing the structure of a CA processing module included in each of a stored type digital broadcasting receiver of the present invention and a prior art stored type digital broadcasting receiver;
Fig. 14 is a block diagram showing the structure of a stored type digital broadcasting transmitter according to embodiment 1 of the present invention;
Fig. 15 is an explanatory drawing showing the structure of an error correction frame processed by the stored type digital broadcasting transmitter according to embodiment 1 of the present invention and a stored type digital broadcasting receiver;
Fig. 16 is an explanatory drawing showing a frame that is constructed when transmitted in the stored type digital broadcasting transmitter according to embodiment 1 of the present invention and a stored type digital broadcasting receiver;
Fig. 17 is an explanatory drawing showing the structure of a data archive for storing broadcasting contents in the stored type digital broadcasting transmitter according to embodiment 1 of the present invention and a stored type digital broadcasting receiver;
Fig. 18 is a block diagram showing the structure of a stored type digital broadcasting transmitter according to embodiment 2 according to the present invention;
Fig. 19 is a block diagram showing the structure of a stored type digital broadcasting transmitter according to embodiment 3 of the present invention;
Fig. 20 is a block diagram showing the structure of a stored type digital broadcasting transmitter according to embodiment 4 of the present invention;
Fig. 21 is a block diagram showing the structure of a stored type digital broadcasting receiver according to embodiment 5 of the present invention;
Fig. 22 is a block diagram showing the structure of a stored type digital broadcasting receiver according to embodiment 6 of the present invention;
Fig. 23 is a block diagram showing the structure of a stored type digital broadcasting receiver according to embodiment 7 of the present invention; and
Fig. 24 is a block diagram showing the structure of a stored type digital broadcasting receiver according to embodiment 8 of the present invention.

### Preferred Embodiments of the Invention

In order to explain the present invention in greater detail, the preferred embodiments will be described below with reference to the accompanying figures.

### Embodiment 1.

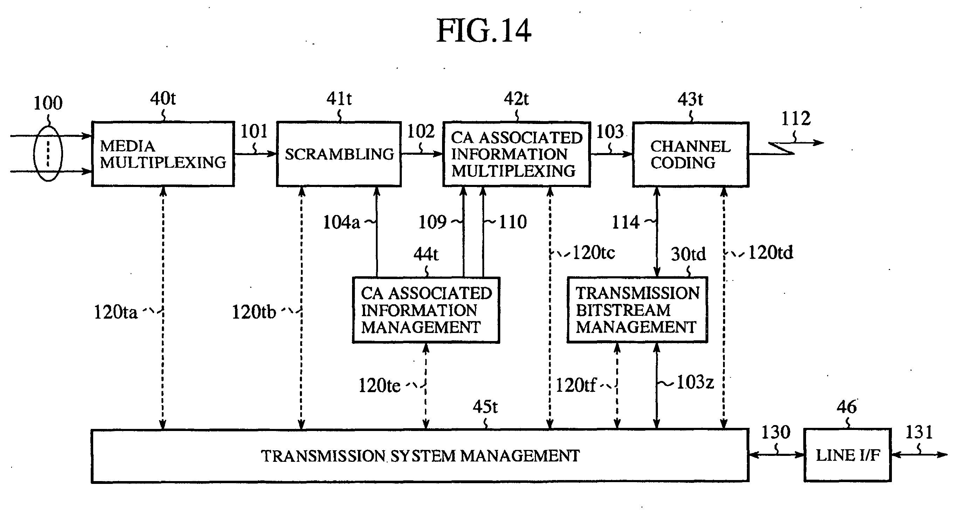

Fig. 14 is a block diagram showing the structure of a stored type digital broadcasting transmitter according to embodiment 1 of the present invention. In Fig. 14, reference numeral 40t denotes a media multiplexing unit for multiplexing a coded video bitstream, a coded audio bitstream and so on so as to generate a multiplexed bitstream, reference numeral 41t denotes a scrambling unit for scrambling broadcasting contents, reference numeral 42t denotes a CA (conditional access) associated information multiplexing unit for multiplexing information associated with a pay broadcasting, reference numeral 43t denotes a channel coding unit, reference numeral 44t denotes a CA associated information management unit for managing CA associated information and for generating key data (a scrambling key) used for scrambling processing and the CA associated information, reference numeral 45t denotes a transmission system management unit for managing and controlling the operation of the entire stored type digital broadcasting transmitter, and reference numeral 30td denotes a transmission bitstream management unit for temporarily storing the transmitted broadcasting contents. The stored type digital broadcasting transmitter has a structure which is almost similar to that of the prior art stored type digital broadcasting. transmitter as shown in Fig. 1, except the transmission bitstream management unit (30td), and therefore the detailed explanation of the same components as those of the prior art stored type digital broadcasting transmitter will be omitted hereafter.

Next, a description will be made as to a characterized operation of the stored type digital broadcasting transmitter according to this embodiment 1. The stored type digital broadcasting transmitter according to this embodiment 1 operates in the same manner that the above-mentioned prior art stored type digital broadcasting transmitter does, except that it operates in the following manner. Even in all other embodiments, a characterized operation of the stored type digital broadcasting transmitter will be explained.

The transmission bitstream management unit (30td) of embodiment 1 stores broadcasting contents in the form of a line coded intermediate bitstream (114) which is a signal being processed in the channel coding unit (43t), as shown in Fig. 14. For example, an FEC (forward error correction) frame, i.e., an error correction frame, a CRC (cyclic redundancy check) frame, i.e., an error detection frame, or a transmission frame can be used as the format of the line coded intermediate bitstream (114).

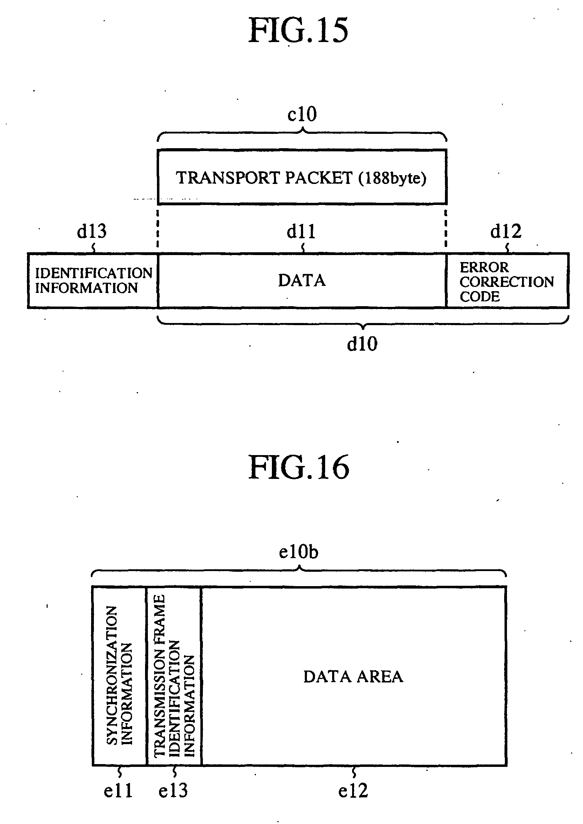

Fig. 15 is an explanatory drawing showing the structure of an error correction frame (FEC frame) used by the stored type digital broadcasting transmitter according to embodiment 1 of the present invention. When an FEC frame is used as the format of the line coded intermediate bitstream (114), identification information (d13) used for identifying each FEC frame (d10) is added to each FEC frame. A value that increments one by one or time information obtained using NTP (Network Time Protocol), which is widely utilized in the Internet, can be assigned, as the identification information (d13), to each FEC frame.

As shown in Fig. 15, identification information (d13) is added to each FEC frame (d10). As an alternative, identification information (d13) can be inserted into each FEC frame (d10).

Fig. 16 is an explanatory drawing showing the structure of a transmission frame (e10b) generated by the stored type digital broadcasting transmitter according to embodiment 1 of the present invention. When using a transmission frame as the format of the line coded intermediate bitstream (114), transmission frame identification information (e13) used for identifying each transmission frame (e10b) is added to each transmission frame. A value that increments one by one or time information obtained using NTP (Network Time Protocol), which is widely utilized in the Internet, can be assigned, as the transmission frame identification information (e13), to each transmission frame.

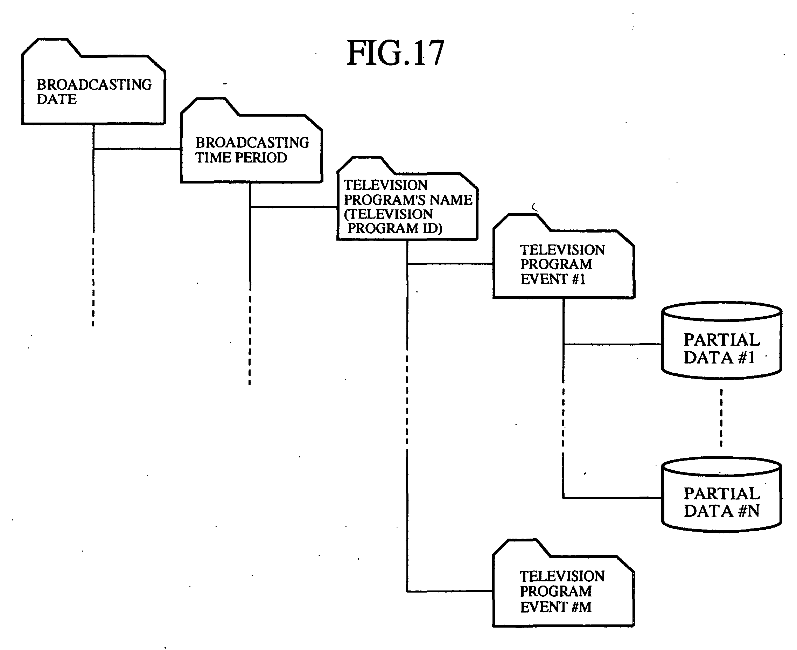

Fig. 17 is an explanatory drawing showing the structure of a data archive used for storing the broadcasting contents in the transmission bitstream management unit (30td). In order to facilitate access to a file, the data archive is so structured as to have a hierarchical structure including layers such as "Broadcasting date", "Broadcasting time period", "Television program's name (television program ID)", and "Television program event (for example, each of corners included in the television program)", and each file is created while being associated with identification information (d13) and transmission frame identification information (e13). The broadcasting contents are stored in the form of a line coded intermediate bitstream (114).

A request for the retransmission of broadcasting contents, which is made by a viewer, is accompanied by information on the identification of the viewer and either the identification information (d13) on the identification of the broadcasting contents which are to be retransmitted or the transmission frame identification information (e13), and is received, via the line interface (46), by the transmission system management unit (45t). The transmission system management unit (45t) identifies the viewer who has made the retransmission request with reference to the viewer identification information, and recognizes the broadcasting contents which have been requested for the retransmission by referring to the identification information (d13) or the transmission frame identification information (e13) transmitted thereto. The transmission system management unit (45t) notifies the transmission bitstream management unit (30td) of the broadcasting contents which are to be retransmitted by using a transmission system control signal (120tf). The transmission bitstream management unit (30td), which has received the retransmission request, reads the broadcasting contents which have been requested for the retransmission from among a plurality of broadcasting contents files stored and transfers the broadcasting contents to the transmission system management unit (45t).

The transmission system management unit (45t) then transfers the broadcasting contents to be retransmitted to the channel coding unit (43t) by using a transmission system control signal (120td), so that the stored type digital broadcasting transmitter transmits the broadcasting contents by using a data broadcasting channel.

As an alternative, the stored type digital broadcasting transmitter can transfer the broadcasting contents to be retransmitted from the transmission system management unit (45t) to the CA associated information management unit (44t) by using a transmission system control signal (120te) so as to allow the CA associated information management unit (44t) to store the broadcasting contents to be retransmitted in the EMM (110) so that it is multiplexed into the CA associated information multiplexed bitstream (103). As a result, the stored type digital broadcasting transmitter can transmit the broadcasting contents by using the television program transmission channel.

As an alternative, the stored type digital broadcasting transmitter can transfer the broadcasting contents to be retransmitted from the transmission system management unit (45t), by way of the line interface (46) and either a cable transmission path, such as a public telephone network, a CATV network, or the Internet, or a radio transmission path, to the viewer who has made the request for the retransmission of the broadcasting contents.

As mentioned above, in accordance with this embodiment 1, the stored type digital broadcasting transmitter temporarily stores already-broadcast contents in the form of a line coded intermediate bitstream (114) by using the transmission bitstream management unit (30td), and, in response to a request for the retransmission of the broadcasting contents from a viewer, reads the broadcasting contents which have been requested for the retransmission from among a plurality of broadcasting contents files stored therein and then transmits them to the viewer. Therefore the present embodiment offers an advantage of being able to repair a part of any broadcasting contents which cannot be received correctly, i.e., a not-correctly-received part of any broadcasting contents.

### Embodiment 2.

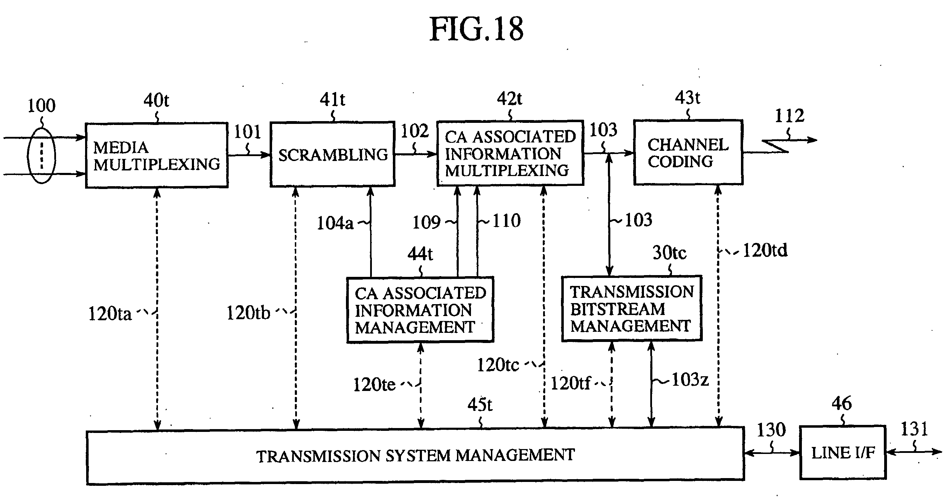

Fig. 18 is a block diagram showing the structure of a stored type digital broadcasting transmitter according to embodiment 2 of the present invention. It is clear from the comparison between Fig. 18 and Fig. 14 that the stored type digital broadcasting transmitter of embodiment 2 has the same structure as that of embodiment 1, except a transmission bitstream management unit. In Fig. 18, the same components are designated by the same reference numerals as shown in Fig. 14 and therefore the explanation of those components will be omitted hereafter.

The transmission bitstream management unit (30tc) of this embodiment 2 is characterized in that it stores the broadcasting contents in the form of a CA associated information multiplexed bitstream (103) output from a CA associated information multiplexing unit (42t) . In order to facilitate access to files, a data archive for storing the broadcasting contents, has a hierarchical structure including layers, such as "Broadcasting date", "Broadcasting time period", "Television program's name (television program ID)", and "Television program event (for example, each corner of the television program)". Each file is created while being associated with a time stamp of a PTS or DTS carried by a PES packet transmitted at an appropriate time. In other words, a transport packet corresponding to a series of PES packets including a PES packet carrying a PTS through another PES packet generated immediately before another PES packet carrying the next PTS is stored in each file so that each file is associated with a time stamp value. As a result, when the time stamps of the head and tail of the broadcasting contents to be retransmitted are specified, the stored type digital broadcasting transmitter can read a part of the broadcasting contents file stored in the transmission bitstream management unit (30tc), which have been requested for the transmission, so as to transmit it.

The stored type digital broadcasting transmitter of this embodiment 2 can create each file while associating each file with a PCR (c20) carried by a transport packet transmitted at an appropriate time, instead of storing each file in the transmission bitstream management unit (30tc) while associating each file with a time stamp of a PTS or DTS carried by a PES packet transmitted at an appropriate time. In other words, a series of transport packets including a transport packet carrying a PCR through another transport packet carrying the next PCR is stored in each file so that each file is associated with a PCR value. As a result, when the PCR values of the head and tail of the broadcasting contents to be retransmitted are specified, the stored type digital broadcasting transmitter can read a part of the broadcasting contents file stored in the transmission bitstream management unit (30tc), which has been requested for the retransmission, so as to retransmit it.

The stored type digital broadcasting transmitter of this embodiment 2 can store all pieces of media information which constitute a television program in different files according to PIDs (c15), instead of storing multiplexed information into which the pieces of media information are multiplexed in the transmission bitstream management unit (30tc). In this case, when the PCR values and PID values of the head and tail of the broadcasting contents to be retransmitted are specified, the stored type digital broadcasting transmitter can read a part of the broadcasting contents file stored in the transmission bit stream management unit (30tc), which has been requested for the retransmission, so as to retransmit it.

The stored type digital broadcasting transmitter of this embodiment 2 can store a series of PES packets including a PES packet carrying a PTS through another PES packet generated immediately before another PES packet carrying the next PTS in each file in the form of PES packets, instead of storing a transport packet corresponding to a series of PES packets including a PES packet carrying a PTS through another PES packet generated immediately before another PES packet carrying the next PTS in each file.

As mentioned above, in accordance with this embodiment 2, the stored type digital broadcasting transmitter temporarily stores already-broadcast contents in the form of a CA associated information multiplexed bitstream (103) by using the transmission bitstream management unit (30td), and, in response to a request for the retransmission of the broadcasting contents from a viewer, reads the broadcasting contents which have been requested for the retransmission from among a plurality of broadcasting contents files stored therein and then transmits them to the viewer. Therefore the present embodiment offers an advantage of being able to repair a not-correctly-received part of any broadcasting contents.

Furthermore, since the stored type digital broadcasting transmitter can store the broadcasting contents in the transmissionbitstreammanagementunit (30tc) according to PIDs (c15), the stored type digital broadcasting transmitter can transmit a part of the broadcasting contents which has been requested for the retransmission, when the PCR values and PID values of the head and tail of the broadcasting contents to be retransmitted are specified, thereby reducing the amount of data to be transmitted.

### Embodiment 3.

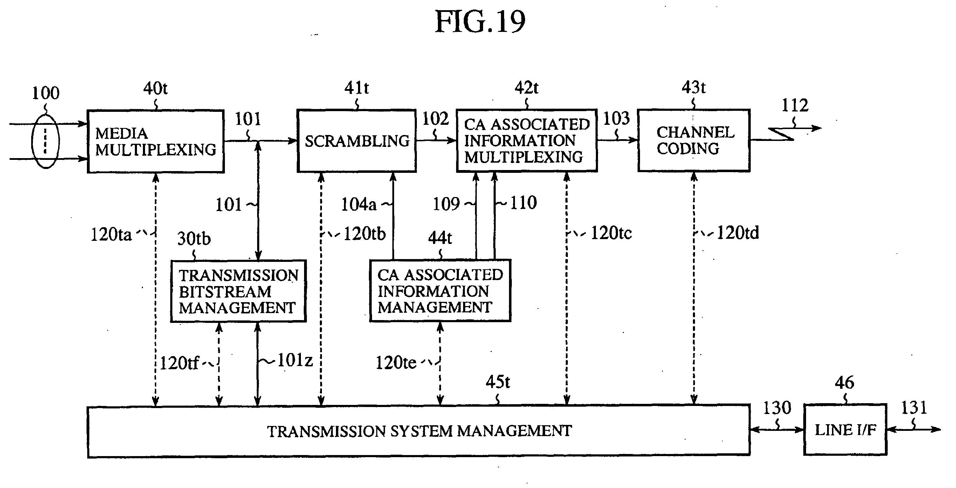

Fig. 19 is a block diagram showing the structure of a stored type digital broadcasting transmitter according to embodiment 3 of the present invention. It is clear from the comparison between Fig. 19 and Fig. 14 or Fig. 18 that the stored type digital broadcasting transmitter of embodiment 3 has the same structure as that of embodiment 1 or 2, except a transmission bitstream management unit. In Fig. 19, the same components are designated by the same reference numerals as shown in Fig. 14 or 18 and therefore the explanation of those components will be omitted hereafter.

The transmission bitstream management unit (30tb) of this embodiment 3 is characterized in that it stores the broadcasting contents in the form of a multiplexed bitstream (101) output from a media multiplexing unit 40t. A data archive for storing the broadcasting contents has the same structure as that of above-mentioned embodiment 2.

As mentioned above, in accordance with this embodiment 3, the stored type digital broadcasting transmitter temporarily stores already-broadcast contents in the form of a multiplexed bitstream (101) by using the transmission bitstream management unit (30td), and, in response to a request for the retransmission of the broadcasting contents from a viewer, reads the broadcasting contents which have been requested for the retransmission from among a plurality of broadcasting contents files stored therein and then transmits them to the viewer. Therefore the present embodiment offers an advantage of being able to repair a not-correctly-received part of any broadcasting contents.

### Embodiment 4.

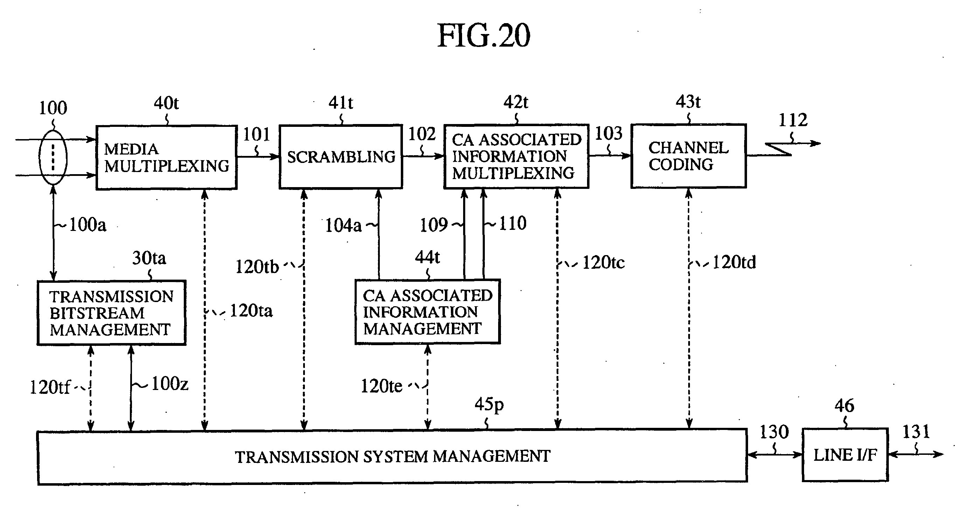

Fig. 20 is a block diagram showing the structure of a stored type digital broadcasting transmitter according to embodiment 4 of the present invention. It is clear from the comparison between Fig. 20 and Fig. 14, Fig. 18, or Fig. 19 that the stored type digital broadcasting transmitter of embodiment 4 has the same structure as that of embodiment 1, 2, or 3, except a transmission bitstream management unit. In Fig. 20, the same components are designatedby the same reference numerals as shown in Fig. 14, 18, or 19 and therefore the explanation of those components will be omitted hereafter.

The transmissionbitstreammanagement unit (30ta) of this embodiment 4 is characterized in that it stores the broadcasting contents in the form of a coded bitstream (100) to be delivered to a media multiplexing unit (40t) . The coded bitstream (100) is partitioned into predetermined units, and to distinguish each unit identification information is given to each unit. As a result, when a coded bitstream corresponding to the broadcasting contents to be retransmitted is specified and a target range'is specified by some pieces of identification information provided for identifying corresponding units, the stored type digital broadcasting transmitter can read a part of the broadcasting contents file stored in the transmission bitstream management unit (30ta), which has been requested for the retransmission, so as to retransmit it.

As mentioned above, in accordance with this embodiment 4, the stored type digital broadcasting transmitter temporarily stores already-broadcast contents in the form of a coded bitstream (100) by using the transmission bitstream management unit (30ta), and, in response to a request for the retransmission of the broadcasting contents from a viewer, reads the broadcasting contents which have been requested for the retransmission from among a plurality of broadcasting contents files stored therein and then transmits them to the viewer. Therefore the present embodiment offers an advantage of being able to repair a not-correctly-received part of any broadcasting contents.

### Embodiment 5.

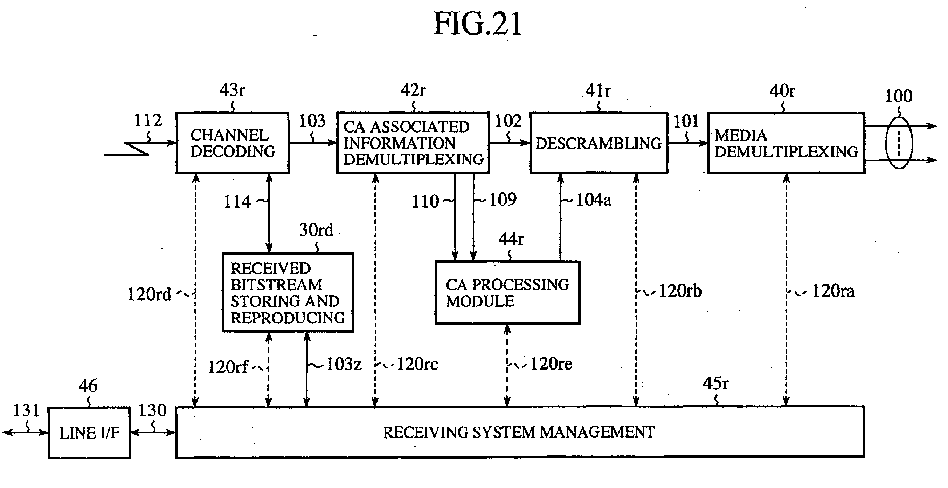

Fig. 21 is a block diagram showing the structure of a stored type digital broadcasting receiver according to embodiment 5 of the present invention. In Fig. 21, reference numeral 40r denotes a media demultiplexing unit for demultiplexing a multiplexed bitstream applied thereto into a coded video bitstream, a coded audio bitstream, and so on, reference numeral 41r denotes a descrambling unit for descrambling scrambled broadcasting contents, reference numeral 42r denotes a CA associated information demultiplexing unit for separating an ECM (109) and an EMM (110) from a CA associated information multiplexed bitstream, reference numeral 43r denotes a channel decoding unit for performing demodulation processing, reconstruction of transmission frames, Viterbi decoding, energy reverse spreading processing, error correction processing, and so on, reference numeral 44r denotes a CA associated information demultiplexing unit for decrypting encrypted information so as to reproduce a scrambling key (104a), reference numeral 45r denotes a receiving system management unit for managing and controlling the operation of the entire stored type digital broadcasting receiver, and reference numeral 30rd denotes a received bitstream storing and reproducing unit for storing and reproducing the received broadcasting contents. The stored type digital broadcasting receiver according to embodiment 5 has the same structure as the prior art stored type digital broadcasting receiver shown in Fig. 2, except the reception bitstream storage and reproduction unit (30rd). The same components or like' components are designated by the same reference numerals as shown in Fig. 2, and there the explanation of those components will be omitted hereafter.

Next, a description will be made as to a characterized operation of the stored type digital broadcasting receiver according to this embodiment 5. The received bit stream storing and reproducing unit (30rd) stores the received broadcasting contents in the form of a line coded intermediate bitstream (114), which is the format of a signal being processed in the channel decoding unit (43r). For example, such a format as an FEC frame (i.e., error correction frame), a CRC frame (i.e., error detection frame), a transmission frame or the like is used as the format of the line coded intermediate bitstream (114).

The channel decoding unit (43r) detects a part of the broadcasting contents which cannot be received correctly because of a transmission path error based on results of the Viterbi decoding or the error correction processing. At that time, either the identification information (d13) of an FEC frame (d10) where a transmission path error, which cannot be corrected, is detected or the transmission frame identification information (e13) of a transmission frame (e10b) is carried to the receiving system management unit (45r) by a receiving system control signal (120rd). After adding viewer identification information to the identification information (d13) or the transmission frame identification information (e13), the receiving system management unit (45r) sends it to the digital broadcasting service provider via the line interface (46) so as to make a request for the retransmission of a complement to the broadcasting contents (i.e., a part to be repaired of the broadcasting contents).

Either a value that increments one by one or time information obtained using NTP (Network Time Protocol), which is widely utilized in the Internet, can be used, as the identification information (d13) or the transmission frame identification information (e13). Furthermore, identification information carried by an EMM and provided for each viewing contract can be used as the viewer identification information.

The received bitstream storing and reproducing unit (30rd) is provided with a data archive for storing and reproducing the received broadcasting contents, which has the same structure as the above-mentioned data archive shown in the Fig. 17. In other words, in order to facilitate access to files, the data archive is so structured as to have a hierarchical structure including layers such as "Broadcasting date", "Broadcasting time period", "Television program's name (television program ID)", and "Television program event (for example, each of corners included in the television program)", and each file is created while being associated with the identification information (d13) or the transmission frame identification information (e13).

When receiving the requested complement to the broadcasting contents from the digital broadcasting service provider, the stored type digital broadcasting receiver refers to either the identification information (d13) of an FEC frame (d10) given to the complement to the broadcasting contents or the transmission frame identification information (e13) of a transmission frame (e10b), and writes the complement to the broadcasting contents over the corresponding file stored in the storage medium of the received bitstream storing and reproducing unit (30rd), or creates a new file and stores it in the new file.

Therefore, since the complement to the broadcasting contents is stored in the corresponding file stored in the storage medium of the received bitstream storing and reproducing unit (30rd) even when the broadcasting contents cannot be normally received due to the occurrence of a transmission path error, the broadcasting contents including a complement, i.e., repaired part which could not be received correctly because of the occurrence of a receive failure can be reproduced.

The stored type digital broadcasting receiver can receive the broadcasting contents which have been retransmitted thereto via a data broadcasting channel through the channel decoding unit (43r), transfer the received broadcasting contents to the receiving system management unit (45r) by using a receiving system control signal (120rd), further transfer the broadcasting contents to the received bitstream storing and reproducing unit (30rd) by using a receiving system control signal (120rf), and then write the received broadcasting contents over the corresponding file stored in the storage medium of the received bitstream storing and reproducing unit (30rd), or create a new file and store it in the new file.

As an alternative, the stored type digital broadcasting receiver can receive the broadcasting contents which have been retransmitted thereto via a cable transmission line, such as a public telephone network, a CATV network, or the Internet, by way of the line interface (46) by using the receiving system management unit (45r), transfer the received broadcasting contents to the received bitstream storing and reproducing unit (30rd) by using a receiving system control signal (120rf), and then write the received broadcasting contents over the corresponding file stored in the storage medium of the received bitstream storing and reproducing unit (30rd) or create a new file and store it in the new file.

As mentioned above, in accordance with this embodiment 5, when detecting a part of broadcasting contents which cannot be received correctly because of a transmission path error during channel decoding of the received broadcasting contents, the stored type digital broadcasting receiver makes a request of a digital broadcasting service provider for the retransmission of the broadcasting contents which cannot be received correctly, and receives and stores the broadcasting contents, which have been retransmitted by the broadcasting service provider in response to the retransmission request, in the. received bitstream storing and reproducing unit (30rd). As result, the stored type digital broadcasting receiver can repair a not-correctly-received part of the broadcasting contents.

### Embodiment 6.

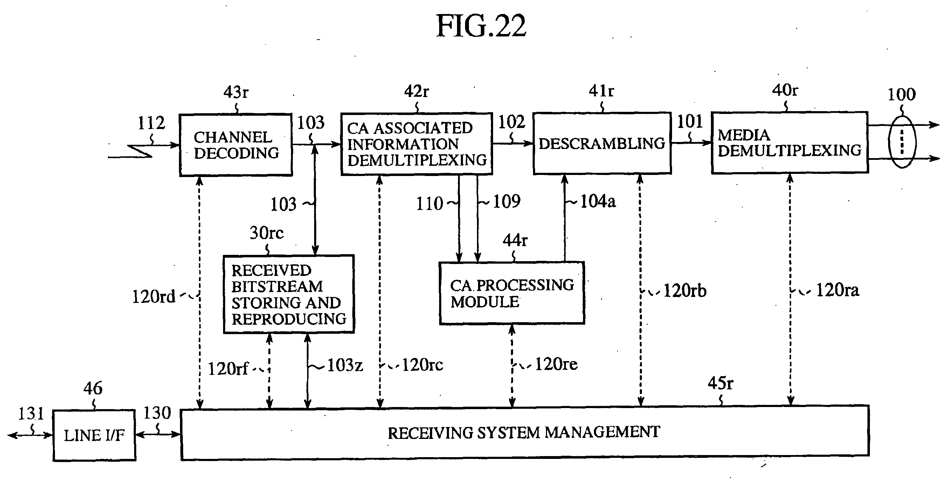

Fig. 22 is a block diagram showing the structure of a stored type digital broadcasting receiver according to embodiment 6 of the present invention. It is clear from the comparison between Fig. 22 and Fig. 21 that the stored type digital broadcasting receiver of embodiment 6 has the same structure as that of embodiment 5, except a reception bitstream storing and reproducing unit (30rc). In Fig. 22, the same components are designated by the same reference numerals as shown in Fig. 21 and therefore the explanation of those components will be omitted hereafter.

The reception bitstream storing and reproducing unit (30rc) of this embodiment 6 stores the broadcasting contents in the form of a CA associated information multiplexed bitstream (103) output from a channel decoding unit (43r), as shown in Fig. 22. In order to facilitate access to files, a data archive for storing the broadcasting contents has a hierarchical structure including layers, such as "Broadcasting date", "Broadcasting time period", "Television program's name (television program ID)", and "Television program event (for example, each corner of the television program)". Each file is created while being associated with a time stamp of a PTS or DTS carried by a PES packet transmitted at an appropriate time. In other words, a transport packet corresponding to a series of PES packets including a PES packet carrying a PTS through another PES packet generated immediately before another PES packet carrying the next PTS is stored in each file so that each file is associated with a time stamp value.

At that time, the media demultiplexing unit (40r) detects a part of the broadcasting contents which cannot be received correctly because of a transmission path error from the received broadcasting contents by referring to the previous PES packet CRC (a18) included in each PES packet. When detecting a PES packet having an error, the media demultiplexing unit (40r) detects PTSs (a17) located before and behind the PES packet having an error and notifies the digital broadcasting service provider of the viewer identification information and the detected time stamp information so as to make a request for the retransmission of a complement to the broadcasting contents.

When receiving the requested complement to the broadcasting contents from the digital broadcasting service provider, the stored type digital broadcasting receiver stores the complement to the broadcasting contents by referring to the time stamp information added to it and then writes the complement to the broadcasting contents over a corresponding file stored in a storage medium of the received bitstream storing and reproducing unit (30rc), or creates a new file and stores it in the new file.

In this embodiment 6, the received bitstream storing and reproducing unit (30rc) can create each file while associating each file with a PCR (c20) carried by a transport packet transmitted at an appropriate time, instead of storing a transport packet corresponding to a series of PES packets including a PES packet carrying a PTS through another PES packet generated immediately before another PES packet carrying the next PTS as each file.. In other words, the stored type digital broadcasting receiver stores a series of transport packets including a transport packet carrying a PCR through another transport packet carrying the next PCR in each file so that each file is associated with a PCR value. As a result, the stored type digital broadcasting receiver can notify the digital broadcasting service provider of the PCR values located before and behind a part of the received broadcasting contents in which an error is detected as well as the viewer identification information, and make a request for the retransmission of the complement to the broadcasting contents.

The stored type digital broadcasting receiver of this embodiment 6 can store all pieces of media information which constitute a television program in different files according to PIDs (c15), instead of storing multiplexed information into which the pieces of media information are multiplexed in the received bitstream storing and reproducing unit (30rc). In this case, by specifying the PCR values and PID values located before and behind a part of the received broadcasting contents in which an error is detected, the stored type digital broadcasting receiver can make a request for the retransmission of the complement to the broadcasting contents.

The stored type digital broadcasting receiver of this embodiment 6 can store a series of PES packets including a PES packet carrying a PTS through another PES packet generated immediately before another PES packet carrying the next PTS in each file in the form of PES packets, instead of storing a transport packet corresponding to a series of PES packets including a PES packet carrying a PTS through another PES packet generated immediately before another PES packet carrying the next PTS in each file.

As mentioned above, in accordance with this embodiment 6, when detecting a part of broadcasting contents which cannot be received correctly because of a transmission path error during channel decoding of the received broadcasting contents so as to display them, the stored type digital broadcasting receiver makes a request of a digital broadcasting service provider for the retransmission of the broadcasting contents which cannot be received correctly and receives and stores the broadcasting contents, which have been retransmitted by the broadcasting service provider in response to the retransmission request, in a storage medium of the received bitstream storing and reproducing unit (30rc). As result, the stored type digital broadcasting receiver can repair a not-correctly-received part of the broadcasting contents.

### Embodiment 7.

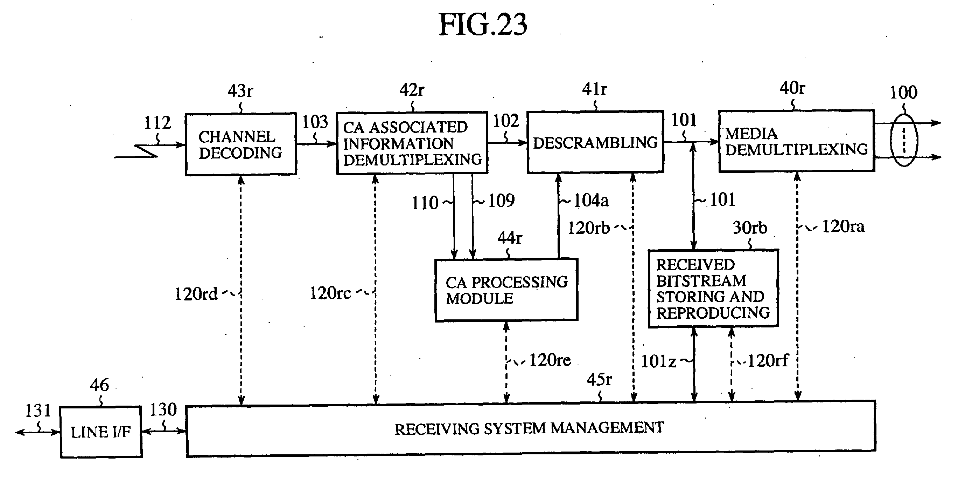

Fig. 23 is a block diagram showing the structure of a stored type digital broadcasting receiver according to embodiment 7 of the present invention. It is clear from the comparison between Fig. 23 and Fig. 21 or 22 that the stored type digital broadcasting receiver of embodiment 7 has the same structure as that of embodiment 5 or 6, except a reception bitstream storing and reproducing unit (30rb). In Fig. 23, the same components are designated by the same reference numerals as shown in Fig. 21 or 22 and therefore the explanation of those components will be omitted hereafter.

The received bitstream storing and reproducing unit (30rb) of this embodiment 7 stores the received broadcasting contents in the form of a multiplexed bitstream (101) output from a descrambling unit 41r. A data archive for storing the broadcasting contents has the same structure as that of above-mentioned embodiment 5.

At that time, the media demultiplexing unit (40r) checks either the previous PES packet CRC (a18) included in each PES packet (a10) or the CRC32 (b13) included in each section (b10) so as to detect a part of the broadcasting contents which cannot be received correctly because of a transmission path error from the received broadcasting contents. When detecting an error, the media demultiplexing unit (40r) detects the PCR values located before and behind a transport packet carrying a PES packet or section including the error, and notifies the digital broadcasting service provider of the detected PCR values as well as the viewer identification information andmakes a request for the retransmission of a complement to the broadcasting contents.

When receiving the requested complement to the broadcasting contents from the digital broadcasting service provider, the stored type digital broadcasting receiver stores the complement to the broadcasting contents by referring to the time stamp information added to it and then writes the complement to the broadcasting contents over a corresponding file stored in a storage mediumof the receivedbitstream storing and reproducing unit (30rb), or creates a new file and stores it in the new file.

As mentioned above, in accordance with this embodiment 7, when detecting a part of broadcasting contents which cannot be received correctly because of a transmission path error during demultiplexing of the received broadcasting contents into plural pieces of media information, the stored type digital broadcasting receiver makes a request of a digital broadcasting service provider for the retransmission of the broadcasting contents which cannot be received correctly and receives and stores the broadcasting contents, which have been retransmitted by the broadcasting service provider in response to the retransmission request, in a storage medium of the received bitstream storing and reproducing unit (30rb). As result, the stored type digital broadcasting receiver can repair a not-correctly-received part of the broadcasting contents.

### Embodiment 8.

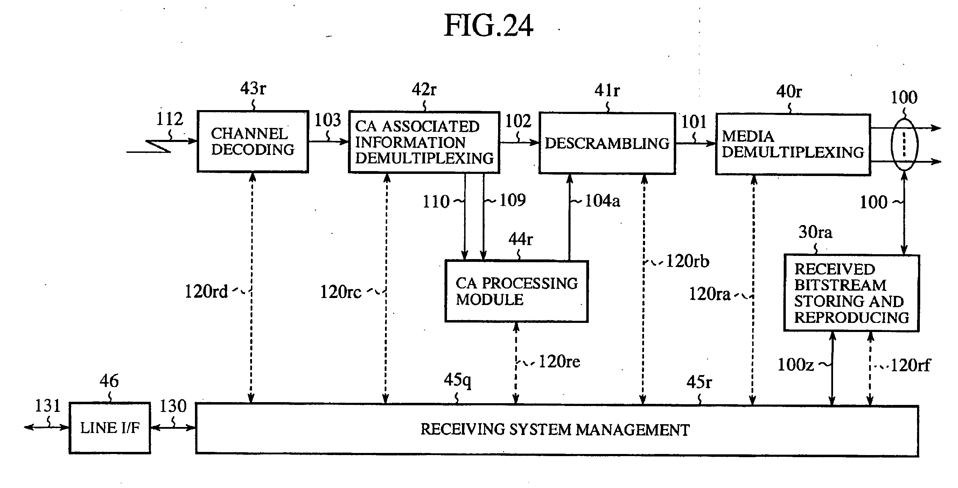

Fig. 24 is a block diagram showing the structure of a stored type digital broadcasting receiver according to embodiment 8 of the present invention. It is clear from the comparison between Fig. 24 and Fig. 21, 22, or 23'that the stored type digital broadcasting receiver of embodiment 8 has the same structure as that of embodiment 5, 6, or 7, except a reception bitstream storing and reproducing unit (30ra). In Fig. 24, the same components are designatedby the same reference numerals as shown in Fig. 21, 22, or 23 and therefore the explanation of those components will be omitted hereafter.

The received bitstream storing and reproducing unit (30ra) of this embodiment 8 stores the broadcasting contents in the form of a coded bitstream (100) output from a media demultiplexing unit (40ra). The coded bitstream (100) is partitioned into predetermined units, and identification information is given to each unit in order to distinguish each unit.

Like the media demultiplexing unit (40r) of above-mentioned embodiment 7, the media demultiplexing unit (40r) checks either the previous PES packet CRC (a18) included in each PES packet (a10) or the CRC32 (b13) included in each section (b10) so as to detect a part of the broadcasting contents which cannot be received correctly because of a transmission path error from the received broadcasting contents. When detecting a part of the broadcasting contents which cannot be received correctly, the media demultiplexing unit (40r) detects the PCR values located before and behind a transport packet carrying a PES packet or section including the error, and notifies the digital broadcasting service provider of the detected PCR values as well as the viewer identification information and makes a request for the retransmission of a complement to the broadcasting contents. The stored type digital broadcasting receiver then notifies the digital broadcasting service provider of information on identification of coded bitstreams which need to be retransmitted and specification of a range of coded bitstreams to be retransmitted by using the identification information given to each coded bitstream. To this end, the received bitstream storing and reproducing unit (30ra) stores the broadcasting contents in units of a coded bitstream.

As mentioned above, in accordance with this embodiment 8, when detecting a part of broadcasting contents which cannot be received correctly because of a transmissionpath error during demultiplexing of the received broadcasting contents into plural pieces of media information, the stored type digital broadcasting receiver makes a request of a digital broadcasting service provider for the retransmission of the broadcasting contents which cannot be received correctly and receives and stores the broadcasting contents, which have been retransmitted by the broadcasting service provider in response to the retransmission request, in a storage medium of the received bitstream storing and reproducing unit (30ra). As result, the stored type digital broadcasting receiver can repair a not-correctly-received part of the broadcasting contents.

### Industrial Applicability

As mentioned above, the stored type digital broadcasting transmitter and stored type digital broadcasting receiver in ' accordance with the present invention are suitable for broadcasting of contents with no degradation in the broadcasting contents regardless of the state of a transmission path, and for providing pay broadcasting services that can prevent pay viewing subscribers from having disadvantages.

## Claims

1. A stored type digital broadcasting transmitter for transmitting broadcasting contents stored therein, **characterized in that** said transmitter comprises:
a means for receiving a request for retransmission of broadcasting contents from a viewer;
a means for identifying the viewer who made the request for the retransmission of the broadcasting contents; and
a means for transmitting the broadcasting contents which have been requested for the retransmission to the viewer.

2. The stored type digital broadcasting transmitter according to Claim 1, **characterized in that** said stored type digital broadcasting transmitter transmits the broadcasting contents, which have been requested for the retransmission by the viewer, to the viewer by using a data broadcasting channel.

3. The stored type digital broadcasting transmitter according to Claim 1, **characterized in that** said stored type digital broadcasting transmitter transmits the broadcasting contents, which have been requested for the retransmission by the viewer, to the viewer by storing the broadcasting contents in an EMM (entitlement management message).

4. The stored type digital broadcasting transmitter according to Claim 1, **characterized in that** said stored type digital broadcasting transmitter transmits the broadcasting contents, which have been requested by the viewer so that they are retransmitted, to the viewer by way of a cable transmission line.

5. The stored type digital broadcasting transmitter according to Claim 1, **characterized in that** said stored type digital broadcasting transmitter receives a request for the retransmission of the broadcasting contents from the viewer as well as identification information on identification of the viewer, and then transmits the broadcasting contents, which have been requested for the retransmission, to the viewer according to the identification information.

6. The stored type digital broadcasting transmitter according to Claim 1, **characterized in that** when transmitting the broadcasting contents, said stored type digital broadcasting transmitter adds identification information used for identifying either each error correction frame or each error detection frame, or each frame which is constructed when transmitting the broadcasting contents, to the target to be identified.

7. The stored type digital broadcasting transmitter according to Claim 1, **characterized in that** said stored type digital broadcasting transmitter broadcasts the broadcasting contents having time information added thereto, receives a request for the retransmission of the broadcasting contents specified by the viewer using time information, and retransmits a specified part of the broadcasting contents to the viewer.

8. The stored type digital broadcasting transmitter according to Claim 1, **characterized in that** said stored type digital broadcasting transmitter stores digital broadcasting contents defined by an MPEG-2 system standard in PES packets, multiplexes the PES packets into a transport stream so as to transmit the transport stream, and retransmits predetermined PES packets in response to a request for the retransmission of the broadcasting contents from a viewer.

9. The stored type digital broadcasting transmitter according to Claim 1, **characterized in that** said stored type digital broadcasting transmitter multiplexes and transmits digital broadcasting contents by using a transport stream defined by an MPEG-2 system standard, and retransmits transport packets specified by a PCR (program clock reference) value in response to a request for the retransmission of the broadcasting contents from a viewer.

10. A stored type digital broadcasting receiver for storing and reproducing a broadcast program, **characterized in that** said stored type digital broadcasting receiver comprises:
a means for detecting a part of broadcasting contents which cannot be received correctly because of a transmission path error; and
a means for making a request of a digital broadcasting service provider for the retransmission of the broadcasting contents which cannot be received correctly, and **characterized in that** said stored type digital broadcasting receiver reproduces the broadcasting contents from which an influence of the transmission path error is removed by receiving and storing a complement to the broadcasting contents which is sent from the digital broadcasting service provider.

11. The stored type digital broadcasting receiver according to Claim 10, **characterized in that** said stored type digital broadcasting receiver automatically detects an invalid data portion in the received broadcasting contents based on an error correction result or error detection result, which is obtained during channel decoding, and delivers either an FEC (forward error correction) frame or CRC (cyclic redundancy check) frame including the invalid data portion or a frame which is constructed when transmitted to the digital broadcasting service provider so as to make a request for the retransmission of the complement to the broadcasting contents.

12. The stored type digital broadcasting receiver according to Claim 10, **characterized in that** said stored type digital broadcasting receiver automatically detects an invalid data portion in the received broadcasting contents based on an error correction result or error detection result, which is obtained when demultiplexing the received broadcasting contents into plural pieces of media information.

13. The stored type digital broadcasting receiver according to Claim 10, **characterized in that** said stored type digital broadcasting receiver receives the complement to the broadcasting contents by way of a data broadcasting channel.

14. The stored type digital broadcasting receiver according to Claim 10, **characterized in that** said stored type digital broadcasting receiver receives the complement to the broadcasting contents by way of a line interface with a public network.

15. The stored type digital broadcasting receiver according to Claim 10, **characterized in that** when detecting an invalid data portion from the receivedbroadcasting contents, said stored type digital broadcasting receiver makes a request of the digital broadcasting service provider for the retransmission of the missing portion of the broadcasting contents while adding viewer identification information to the request.

16. The stored type digital broadcasting receiver according to Claim 10, **characterized in that** said stored type digital broadcasting receiver receives broadcasting contents having time information added thereto, and, when detecting an invalid data portion from the received broadcasting contents, makes a request of the digital broadcasting service provider for the retransmission of the missing portion of the broadcasting contents while adding time information associated with the error detected portion to the request.

17. The stored type digital broadcasting receiver according to Claim 10, **characterized in that** in a stored type digital broadcasting service by which digital broadcasting contents are multiplexed and transmitted by using a transport stream defined by an MPEG-2 system standard, when detecting a transmission path error in the received broadcasting contents, as for a media stream to which PTSs (presentation time stamps) are added when PES packetized, said stored type digital broadcasting receiver makes a request for the retransmission of a part of the media stream corresponding to a series of PES packets including a PES packet carrying a PTS generated immediately before appearance of the error through another PES packet carrying a PTS generated immediately behind disappearance of the error.

18. The stored type digital broadcasting receiver according to Claim 10, **characterized in that** in a stored type digital broadcasting service by which.digital broadcasting contents are multiplexed and transmitted by using a transport stream defined by an MPEG-2 system standard, when detecting a transmission path error in the received broadcasting contents, said stored type digital broadcasting receiver makes a request for the retransmission of a part of the received broadcasting contents corresponding to a series of transport packets including a transport packet carrying a PCR (program clock reference) generated immediatelybefore appearance of the error through another transport packet carrying a PCR generated immediately behind disappearance of the error.
